# EUROPEAN PATENT APPLICATION

(11) **EP 4 447 311 A1**
(43) Date of publication of application: **16.10.2024**
(21) Application number: 22903890.6
(22) Date of filing: 24.10.2022
(51) Int. Cl.: H02P 29/00, H02K 11/20

(54) **ACTUATOR**

(30) Priority: 06.12.2021 JP 2021197428
(71) Applicant: Sumitomo Heavy Industries, Ltd., Tokyo 141-6025 (JP)
(72) Inventor: MORITANI, Koji, Yokosuka-shi, Kanagawa 237-8555 (JP)
(74) Representative: Louis Pöhlau Lohrentz
(86) International application number: PCT/JP2022/039532
(87) International publication number: WO 2023/105957

(57) **Abstract**

To achieve the purpose of performing operation control for an actuator with higher accuracy, this actuator includes a speed reducer 15, a motor 12, and a control unit 31 that controls the motor 12 based on predetermined control parameters, a sensor 19 that is installed in the speed reducer 15 and detects information affected by the abrasion state of the speed reducer 15, and a correction unit 32 that corrects the control parameters based on the detected information from the sensor 19, wherein the correction unit 32 acquires control parameters according to the abrasion state of the speed reducer 15, and updates these control parameters with new control parameters. The control unit 31 executes operation control for the motor 12 based on the updated control parameters.

## Description

### Technical Field

The present invention relates to an actuator.

### Background Art

In an actuator including a motor and a speed reducer, when performing control in consideration of various characteristics of the speed reducer, various characteristics that affect the control are measured in advance, and parameters are identified to be reflected in the control model of the actuator (See, for example, PTL 1) .

Then, in a case where the parameters of various characteristics are changed or deteriorated due to a secular change of the speed reducer, it is necessary to reacquire necessary characteristics by measurement and perform calibration for identifying the parameters.

### Citation List

### Patent Literature

[PTL 1] Japanese Unexamined Patent Publication No. 2021-97430

### Summary of Invention

### Technical Problem

However, in a case where the actuator is attached to another device and is actually placed in a usage environment, the characteristics are usually not remeasured according to the secular change, so that it is only possible to continue using the initial setting parameters. Therefore, in order to allow each parameter error caused by a secular change of the speed reducer, it is necessary to perform control with low sensitivity such as reducing the control gain.

An object of the present invention is to maintain high control accuracy of an actuator.

### Solution to Problem

The present invention is an actuator including a speed reducer, a motor, a control unit that controls the motor based on predetermined control parameters, a sensor that is installed in the speed reducer and detects information that is affected by an abrasion state of the speed reducer, and a correction unit that corrects control parameters based on the detected information from the sensor.

### Advantageous Effects of Invention

According to the present invention, it is possible to maintain high control accuracy of an actuator.

### Brief Description of Drawings

Fig. 1 is a sectional view showing a driving device according to an embodiment of the present invention.
Fig. 2 is a perspective view of the driving device according to the present embodiment.
Fig. 3 is a front view of a first internal tooth member.
Fig. 4 is a diagram showing a stress distribution of a first internal gear.
Fig. 5 is a line diagram showing a starting torque of a driving device at a control parameter (1).
Fig. 6 is a diagram showing an angle transmission error of the driving device at a control parameter (2).
Fig. 7 is a diagram showing a twist angle generated in an output member of a speed reducer of the driving device at a control parameter (3).
Fig. 8 is a diagram showing hysteresis of a twist angle generated in the output member of the speed reducer of the driving device at a control parameter (4).
Fig. 9 is an explanatory diagram showing an image of a backlash at a control parameter (5).

### Description of Embodiments

Hereinafter, embodiments of the present invention will be described in detail with reference to the drawings.

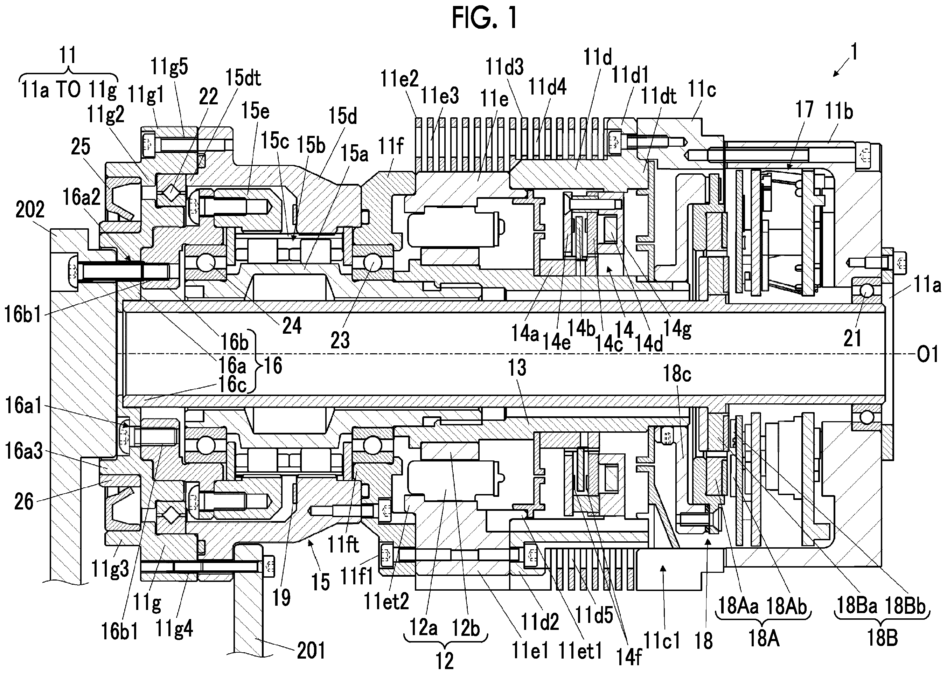

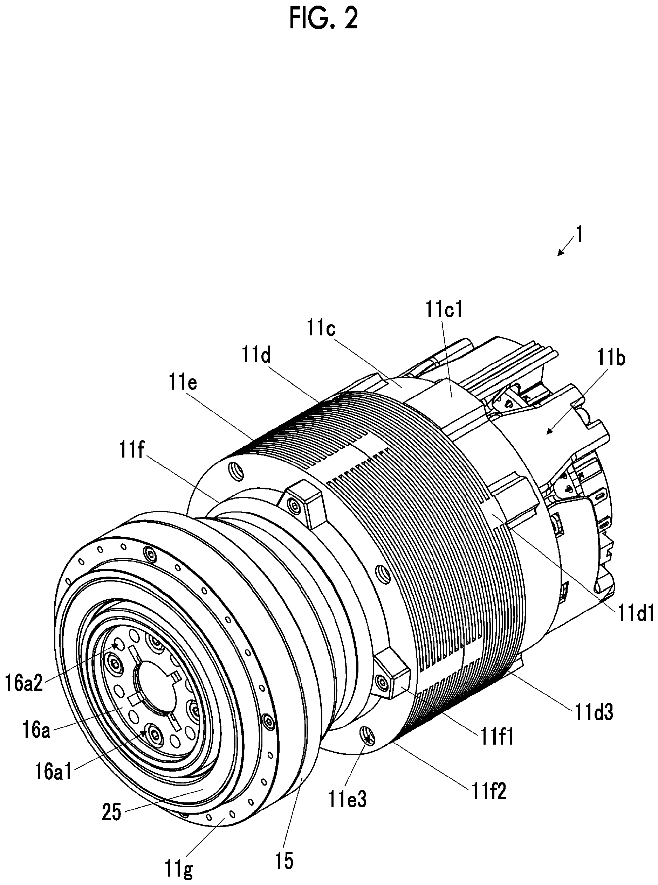

Fig. 1 is a sectional view showing a driving device as an actuator according to an embodiment of the present invention. Fig. 2 is a perspective view of the driving device according to the present embodiment.

A driving device 1 of the present embodiment is a device that outputs rotational power, and without being particularly limited in application, for example, can be used as a joint driving device of a cooperative robot that performs work in cooperation with a human. Hereinafter, a direction along the center axis O1 is referred to as an axial direction, a radial direction of the center axis O1 is referred to as a radial direction, and a rotation direction centered on the center axis O1 is referred to as a circumferential direction. The center axis O1 is the center axes of the shaft portion 16c of the output member 16 and the rotor shaft 13. Further, in the axial direction of the center axis O1, the side where the output member 16 is located (left side in Fig. 1) is referred to as an output side, and the side opposite thereof (right side in Fig. 1) is referred to as a counter-output side or an input side.

The driving device 1 includes a casing 11 connected to a support member 201 outside the device, a motor (electric motor) 12 that generates rotational power, a rotor shaft 13 to which torque is input by the motor 12, a brake 14 capable of applying braking force to the rotor shaft 13, a speed reducer 15 that decelerates the rotary motion of the rotor shaft 13, an output member 16 that outputs the rotary motion decelerated by the speed reducer 15 to the outside (the mating member 202) of the device, a circuit portion 17 on which an electric circuit is mounted, and a detection portion 18 that detects rotation of the rotor shaft 13 and the output member 16. The circuit portion 17 includes a motor driver board on which the drive circuit of the motor 12 is mounted, and an encoder board on which the detection circuit of the detection portion 18 is mounted. The detection portion 18 includes an input-side rotation detector 18A that detects the rotation of the rotor shaft 13 and an output-side rotation detector 18B that detects the rotation of the output member 16. The speed reducer 15, the motor 12, the brake 14, the detection portion 18, and the circuit portion 17 are disposed side by side from the output side to the counter-output side in this order.

The casing 11 includes hollow tubular or annular members 11a to 11g connected to each other, and is supported by being connected to a support member 201 outside the device. Hereinafter, specific structural examples of the members 11a to 11g will be described, but the casing 11 is not limited to these specific examples.

A member 11a covers the periphery of one end portion of the shaft portion 16c on the counter-output side. The member 11a has a through-hole penetrating in the axial direction, and the through-hole of the member 11a communicates with the through-hole of the shaft portion 16c. The member 11a comes into contact with the outer ring of the bearing 21 from the axial direction. The member 11a is connected to the member 11b via a bolt (connection member).

The member 11b covers the circuit portion 17 from the counter-output sides in the radial and axial directions, fits the outer ring of the bearing 21 therein, and is connected to the member 11c via a bolt.

The member 11c is positioned outward in the radial direction of the detection portion 18 and covers the detection portion 18 in the radial direction. The member 11c is connected to the member 11b and the member 11d via a bolt. The member 11c has a wiring extraction hole 11c1 for extracting the wirings of the motor 12 and the brake 14 in a part in the circumferential direction.

The member 11d is positioned outward in the radial direction of the brake 14, covers the brake 14 in the radial direction, and supports a member on the fixed side of the brake 14. The member 11d has an annular protrusion portion 11dt that protrudes to the counter-output side. The annular protrusion portion 11dt has a diameter smaller than the maximum outer diameter of the member 11d and is fitted (spigot-fitted) to the member 11c. The member 11d has flange portions 11d1 at a plurality of locations in the circumferential direction on the counter-output side, and the flange portions 11d1 are connected to the member 11c via bolts. Further, the member 11d has flange portions 11d2 at a plurality of locations in the circumferential direction on the output side, and the flange portions 11d2 are connected to the member 11e via bolts. The member 11d includes a fin portion 11d3 disposed on an outer peripheral portion other than the flange portions 11d1 and 11d2. The fin portion 11d3 includes a plurality of heat-dissipating fins extending in the radial direction and spreading in the circumferential direction. In the fin portion 11d3, through-holes 11d4 and 11d5 through which the tips of the bolt and the tool pass are provided at locations corresponding to the bolt holes of the flange portions 11d1 and 11d2 (locations that overlap the bolt holes when the bolt holes are extended in the axial direction).

The member 11e is positioned outward in the radial direction of the motor 12, covers the motor 12 in the radial direction, and supports a member on the fixed side of the motor 12. The member 11e has an annular protrusion portion 11et1 protruding to the counter-output side and an annular protrusion portion 11et2 protruding to the output side. The annular protrusion portion 11et1 on the counter-output side has a diameter smaller than the maximum outer diameter of the member 11e and is fitted (spigot-fitted) to the member 11d. The annular protrusion portion 11et2 on the output side has a diameter smaller than the maximum outer diameter of the member 11e and is fitted (spigot-fitted) to the member 11f. The member 11e has flange portions 11e1 at a plurality of locations in the circumferential direction, and the flange portions 11e1 are connected to the members 11d and 11f via bolts. The member 11e includes a fin portion 11e2 disposed on an outer peripheral portion other than the flange portion 11e1. The fin portion 11e2 includes a plurality of heat-dissipating fins extending in the radial direction and spreading in the circumferential direction. The fin portion 11e2 and the fin portion 11d3 of the member 11d described above are adjacent to each other, and a through-hole 11e3 through which bolts and tools pass is provided in the fin portion 11e2 at a position continuous with the through-hole 11d4 of the fin portion 11d3 (an overlapping position when the through-hole 11d4 is extended).

The member 11f covers the output side of the motor 12, and fits the outer ring of the bearing 23 disposed on the counter-output side of the speed reducer 15 therein. The member 11f rotatably supports the wave generator 15a via the bearing 23. The member 11f has a flange portion 11f1 at a position corresponding to the flange portion 11e1 of the adjacent member 11e, and the adjacent flange portions 11f1 and 11e1 are connected to each other via a bolt. In the flange portions 11f1 and 11e1, the bolt hole for connecting the members 11f and 11e and the bolt hole for connecting the members 11e and 11d on the counter-output side thereof may be disposed coaxially. The member 11f is further connected to the internal gear member (first internal gear 15d) of the speed reducer 15 via a bolt. The member 11f has an annular protrusion portion lift that protrudes toward the output side. The annular protrusion portion lift has a diameter smaller than the maximum outer diameter of the member 11f and is fitted (spigot-fitted) to the first internal gear 15d.

The member 11g covers the output member 16 from the radial direction at an end portion on the output side, and fits the outer ring of the bearing 22 and the seal 25 therein. The member 11g rotatably supports the output member 16 via the bearing 22. The member 11g has a flange portion 11g1 that protrudes in the radial direction, and the flange portion 11g1 is connected to a component member (first internal gear 15d) of the speed reducer 15 via a bolt, and further in a state where the first internal gear 15d is co-tightened, the flange portion 11g1 is connected to the support member 201 via a bolt. In the speed reducer 15, the first internal gear 15d has a portion that protrudes to the output side of the second internal gear 15e so as to cover the radial outer side of the second internal gear 15e, and this portion is connected to the member 11g. An annular protrusion portion 15dt protruding to the output side is provided at a portion of the first internal gear 15d that protrudes to the output side. The annular protrusion portion 15dt has a diameter smaller than the maximum outer diameter of the first internal gear 15d and is fitted (spigot-fitted) to the member 11g. At a plurality of positions different in the circumferential direction, the flange portion 11g1 of the member 11g has a bolt insertion hole 11g5 communicating with a screw hole provided in a component member of the speed reducer 15 and a screw hole 11g4 communicating with the bolt insertion hole provided in the component member of the speed reducer 15. The direct connection between the member 11g and the first internal gear 15d via the bolt insertion hole 11g5 and the connection of the member 11g and the support member 201 co-tightened with the first internal gear 15d via the screw hole 11g4 are combined to achieve a defined connection intensity between the member 11g and the first internal gear 15d.

Further, the member 11g has a positioning protrusion (ring portion) 11g2 that protrudes inward in the radial direction and determines an axial position of the bearing 22 and an axial position of the seal 25. Further, the member 11g has a tubular extension portion 11g3 extending in the axial direction and accommodating the seal 25. The tubular extension portion 11g3 extends to the output side from the flange portion 11g1 on the output side of the bearing 22.

The output member 16 includes members 16a and 16b and the shaft portion 16c connected to each other, and is rotatably supported by the casing 11 via the bearings 21 and 22. The output member 16 has a hollow structure (hollow tubular shape). A part of the output member 16 is exposed to the output side, and the exposed portion is connected to the mating member 202. More specifically, the shaft portion 16c penetrates the speed reducer 15 and extends to the counter-output side where the detection portion 18 and the circuit portion 17 are disposed. A rotating portion 18Ba of the output-side rotation detector 18B is fixed to the shaft portion 16c. The shaft portion 16c is tightly fitted to the member 16a on the output side. The member 16b is connected to the second internal gear 15e of the speed reducer 15 via a bolt, and fits the outer ring of the bearing 24 on the output side of the speed reducer 15 therein. The member 16b introduces a rotary motion decelerated from the speed reducer 15, and rotatably supports the wave generator 15a via the bearing 24.

The member 16a is disposed on the output side of the member 16b, fits the shaft portion 16c therein, and fits onto the inner ring of the bearing 22. The member 16a has a bolt insertion hole 16a1 through which the shaft portion of the bolt passes and which accommodates a head portion of the bolt, and a bolt insertion hole 16a2 through which the shaft portion of the bolt passes. The bolt insertion holes 16a1 and 16a2 communicate with any of the plurality of screw holes 16b1 of the adjacent member 16b. The member 16b is directly connected (temporarily fixed) to the member 16b via a bolt inserted into the bolt insertion hole 16a1. Further, the member 16a is co-tightened between the mating member 202 and the member 16b via a bolt inserted into the bolt insertion hole 16a2.

That is, the mating member 202 is connected to the output member 16 via a bolt screwed into the screw hole of the member 16b via the bolt insertion hole 16a2. The member 16a achieves a defined connection intensity for the member 16b by direct connection to the member 16b (connection using four bolts at different positions in the circumferential direction) and co-tightening between the member 16b and the mating member 202 (connection using eight bolts at different positions in the circumferential direction).

The member 16a has a tubular portion 16a3 that faces the tubular extension portion 11g3 of the casing 11 in the radial direction. The tubular portion 16a3 is disposed on the output side of the bolt insertion hole 16a1. A sleeve 26 that comes into contact with the lip portion of the seal 25 is fitted onto the tubular portion 16a3, and the seal 25 is disposed between the sleeve 26 and the tubular extension portion 11g3 of the casing 11. The structure of the output member 16 is not limited to the above-described specific example.

The motor 12 has a stator 12a and a hollow tubular rotor 12b.

The rotor 12b is formed of a permanent magnet, and the stator 12a is formed of an electromagnet. The rotor shaft 13 has a hollow structure and is fitted onto the shaft portion 16c of the output member 16 with a gap interposed therebetween. The rotor shaft 13 is connected to the rotor 12b of the motor 12. The motor 12 and the rotor shaft 13 are disposed on the counter-output side of the speed reducer 15. On the counter-output side, the rotating portion 18Aa of the input-side rotation detector 18A is fixed to the rotor shaft 13 via the hub member 18c.

The speed reducer 15 is a tubular bending meshing type gear mechanism, and includes a wave generator 15a, a wave generator bearing 15b, an external gear 15c that is flexibly deformed due to rotation of the wave generator 15a, and a first internal gear 15d and a second internal gear 15e that mesh with the external gear 15c. The speed reducer is not limited to the tubular type bending meshing type gear mechanism, and various speed reducers can be adopted. For example, a cup type or silk hat type bending meshing type gear mechanism or an eccentric oscillating speed reducer or a simple planetary speed reducer may be used.

The wave generator 15a has a hollow structure, and is disposed outside the shaft portion 16c of the output member 16 with a gap interposed therebetween. The wave generator 15a is connected to the rotor shaft 13 (for example, spline-connected) and rotates integrally with the rotor shaft 13. The shaft portion of the wave generator 15a is rotatably supported by the casing 11 and the output member 16 via the bearings 23 and 24. In the wave generator 15a, the cross-sectional outer shape perpendicular to the axial direction in the shaft portion is circular with the center axis O1 as the center, and the cross-sectional outer shape perpendicular to the axial direction at the portion in contact with the wave generator bearing 15b is, for example, elliptical. The external gear 15c has flexibility. The first internal gear 15d is connected to the casing 11 and meshes with a range on the counter-output side in the axial direction of the external gear 15c. The second internal gear 15e is connected to the output member 16 and meshes with a range on the output side of the external gear 15c in the axial direction.

In the speed reducer 15, the rotary motion is input to the wave generator 15a, and the decelerated rotary motion is output to the second internal gear 15e. In the speed reducer 15, the torque input to the wave generator 15a is amplified, the amplified torque is transmitted to the second internal gear 15e, and the reaction force of the amplified torque is transmitted to the first internal gear 15d. That is, the amplified torque is transmitted to the first internal gear 15d and the second internal gear 15e.

The detection portion 18 includes an input-side rotation detector 18A that detects the rotation of the rotor shaft 13 and an output-side rotation detector 18B that detects the rotation of the output member 16. The input-side rotation detector 18A has a rotating portion 18Aa that rotates integrally with the rotor shaft 13, and a sensor 18Ab that is disposed in the vicinity of the rotating portion 18Aa and detects a rotation amount of the rotating portion 18Aa. The output-side rotation detector 18B has a rotating portion 18Ba that rotates integrally with the output member 16, and a sensor 18Bb that is disposed in the vicinity of the rotating portion 18Ba and detects a rotation amount of the rotating portion 18Ba. The input-side rotation detector 18A and the output-side rotation detector 18B are, for example, rotary encoders that output a rotational displacement of a rotating portion as a digital signal, but may be resolvers that output the rotational displacement as an analog signal or may be other rotation detectors. The rotary encoder may be configured to have an optical detection portion or to have a magnetic detection portion. The input-side rotation detector 18A and the output-side rotation detector 18B may be different types of detectors.

In the input-side rotation detector 18A and the output-side rotation detector 18B, the two sensors 18Ab and 18Bb are mounted on the encoder board of the circuit portion 17, and the two rotating portions 18Aa and 18Ba are disposed so as to face each other from the output side with respect to the circuit portion 17. More specifically, the installation position of the rotating portion 18Ba on the output member 16 and the installation position of the rotating portion 18Aa on the rotor shaft 13 are substantially the same positions in the axial direction, and similarly, the two sensors 18Ab, 18Bb are disposed at substantially the same position in the axial direction. That is, the rotating portion 18Aa and the rotating portion 18Ba are disposed at overlapping positions when viewed in the radial direction, and the rotating portion 18Aa is disposed outside in the radial direction. In addition, the sensor 18Ab and the sensor 18Bb are disposed at overlapping positions when viewed in the radial direction, and the sensor 18Ab is disposed outside in the radial direction.

The brake 14 includes a hub member 14a fixed to the rotor shaft 13 such that relative rotation is restricted, a disk-shaped rotor 14b spline-fitted to the hub member 14a, an armature 14c displaceable toward the rotor 14b, an electromagnetic coil 14d that drives the armature 14c, a spring material that returns the armature 14c to the original position, a plate 14e that faces the rotor 14b on the opposite side of the armature 14c, a lining (abrasion material) 14f fixed to the plate 14e and the armature 14c, and a frame 14g supported by the casing 11 and holding the electromagnetic coil 14d and the plate 14e. In the brake 14, a braking force is applied to the rotor shaft 13 by sandwiching the rotor 14b between the armature 14c and the plate 14e via the lining 14f by the action of the electromagnetic coil 14d or the action of the spring material. Further, due to the action of the spring material or the action of the electromagnetic coil 14d, the force between the armature 14c and the plate 14e that sandwiches the rotor 14b is released, and thus the braking force on the rotor shaft 13 is released.

### [Operation Of Driving Device]

When the motor 12 is driven to rotate the rotor shaft 13 and the wave generator 15a, the motion of the wave generator 15a is transmitted to the external gear 15c. In this case, the external gear 15c is regulated to a shape along the outer peripheral surface of the wave generator 15a and bent into an elliptical shape having a long axis part and a short axis part when viewed from the axial direction. Further, the external gear 15c meshes with the fixed first internal gear 15d at the long axis part. Accordingly, the external gear 15c does not rotate at the same rotational speed as the wave generator 15a, and the wave generator 15a relatively rotates inside the external gear 15c. Further, with this relative rotation, the external gear 15c is flexibly deformed such that the long axis position and the short axis position move in a circumferential direction. A period of the deformation is proportional to a rotation period of the wave generator 15a. When the external gear 15c is flexibly deformed, the position where the external gear 15c and the first internal gear 15d mesh with each other changes in the direction of rotation as a result of the movement of the long axis position. Here, it is assumed that the number of teeth of the external gear 15c is 100 and the number of teeth of the first internal gear 15d is 102. Then, each time the meshing position turns once, the meshing teeth between the external gear 15c and the first internal gear 15d are shifted, and thereby the external gear 15c rotates. At the numbers of teeth described above, the rotary motion of the wave generator 15a is decelerated at a reduction ratio of 100:2 and transmitted to the external gear 15c. On the other hand, since the external gear 15c also meshes with the second internal gear 15e, the meshing position between the external gear 15c and the second internal gear 15e also changes in the rotation direction due to the rotation of the wave generator 15a. Here, assuming that the number of teeth of the second internal gear 15e and the number of teeth of the external gear 15c are the same, the external gear 15c and the second internal gear 15e do not rotate relatively, and the rotary motion of the external gear 15c is transmitted to the second internal gear 15e at a reduction ratio of 1:1. As a result, the rotary motion of the wave generator 15a is decelerated at a reduction ratio of 100:2, transmitted to the second internal gear 15e, and output from the second internal gear 15e to the mating member 202 via the output member 16.

During the transmission of the rotary motion, the rotation position of the rotor shaft 13 is detected by the input-side rotation detector 18A, and the rotation position of the output member 16 is detected by the output-side rotation detector 18B.

When the drive of the motor 12 is stopped and the brake 14 is operated, the armature 14c is driven, the rotor 14b is sandwiched between the plate 14e and the armature 14c via the lining 14f, and a braking force acts on the rotor shaft 13.

When the motor 12 is driven, the armature 14c is separated from the rotor 14b, and the braking force is released.

### [Monitoring Effects Of Abrasion State Of Speed Reducer]

Incidentally, the first internal gear 15d of the speed reducer 15 of the driving device 1 is equipped with strain gauges 19 (strain sensors) as sensors that detect strain at predetermined locations of the first internal gear 15d, as information affected by an abrasion state of the speed reducer.

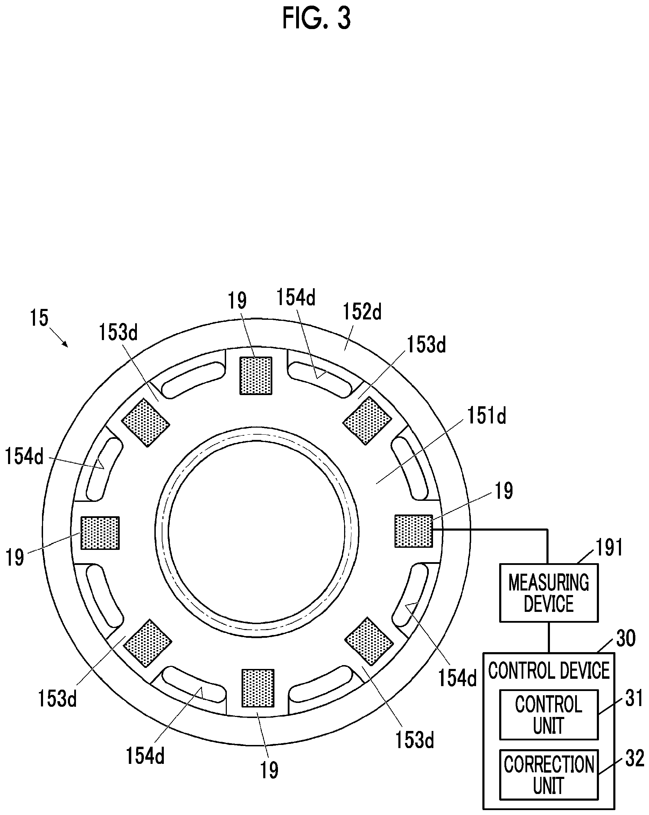

Fig. 3 is a front view of the first internal gear 15d. As shown in Fig. 3, the first internal gear 15d includes an internal tooth ring portion 151d having internal teeth formed on the inner periphery on the counter-output side, an external connection portion 152d connected to the support member 201 together with the member 11g, and an easily deformable portion 153d that is provided between the internal tooth ring portion 151d and the external connection portion 152d in the radial direction, and which is more easily deformable (which has a larger deformation amount) than the internal tooth ring portion 151d when a torque acts on the first internal gear 15d.

A plurality of through-holes 154d (for example, in the case of eight) penetrating in the axial direction at uniform intervals in the circumferential direction are provided between the internal tooth ring portion 151d and the external connection portion 152d. Then, a columnar portion along the radial direction between the through-holes 154d is as the easily deformable portion 153d. That is, each of the easily deformable portions 153d has a narrow width in the circumferential direction due to the through-holes 154d on both sides, and is more easily deformed in the circumferential direction than the outer portion and the inner portion in the radial direction with respect to the easily deformable portion 153d.

In addition, a case where eight easily deformable portions 153d are provided at a constant interval in the circumferential direction will be described as an example.

It is preferable that the interval between the respective easily deformable portions 153d in the circumferential direction is uniform, but this configuration is not essential. In addition, the number of easily deformable portions 153d can also be increased or decreased.

The widths of the outer portion and the inner portion of the easily deformable portion 153d may be smaller in the axial direction than in the radial direction, or the easily deformable portion 153d may not be provided.

As an example, a case will be described where the strain gauge 19 is attached to the easily deformable portion 153d in a direction in which expansion-contraction strain of the easily deformable portion 153d is detected in the radial direction.

The direction of the strain detected by the strain gauge 19 is not limited to the radial direction, and may be a circumferential direction, an axial direction, or an oblique direction in which the circumferential direction and the axial direction are combined.

The easily deformable portion 153d is more significantly deformed than the internal tooth ring portion 151d, when a torque acts on the first internal gear 15d (specifically, in a state where the external connection portion 152d is connected to the support member 201, when the internal tooth ring portion 151d receives a meshing reaction force so that a torque acts on the first internal gear 15d). As a result, the expansion-contraction strain in the radial direction which occurs in the easily deformable portion 153d increases. Since the strain of the easily deformable portion 153d has a correlation with the abrasion state of the internal teeth and the external teeth of the speed reducer 15, the change of the abrasion state can be monitored by detecting the strain with the strain gauge 19.

### [Measuring Device]

Each strain gauge 19 is connected to a measuring device 191. Although Fig. 3 illustrates a state in which only one strain gauge 19 is connected, in reality, all the strain gauges 19 are connected to the measuring device 191.

Since the strain gauge 19 has a characteristic that the resistance value changes according to the strain, the measuring device 191 can receive a detection signal (for example, a voltage signal) indicating the resistance value of each strain gauge 19 to acquire the strain.

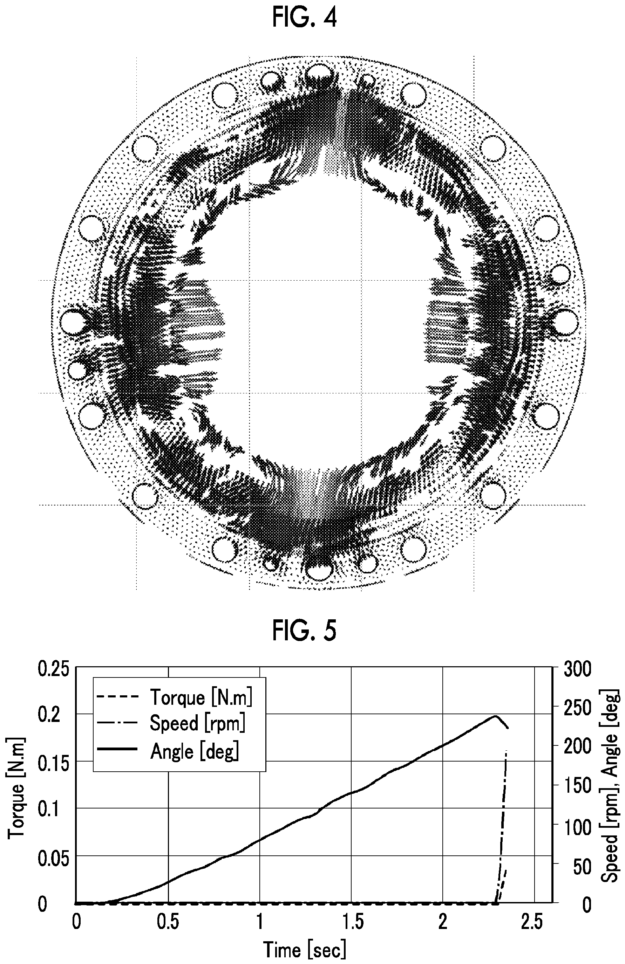

Further, the measuring device 191 can obtain the stress distribution of the first internal gear 15d shown in Fig. 4 from the strain detected by the eight strain gauges 19.

Then, the measuring device 191 inputs the stress distribution of the first internal gear 15d to the control device 30 of the driving device 1 connected to the measuring device 191.

### [Control Device]

The control device 30 of the driving device 1 is configured to include, for example, a calculation processing device including a CPU, a ROM and RAM which are storage devices, and other peripheral circuits. In the present embodiment, the control device 30 is configured by the circuit portion 17 in Fig. 1, but the present invention is not limited thereto, and the control device 30 may be provided separately from the circuit portion 17.

The control device 30 includes a control unit 31 that controls the operation of the driving device 1, and a correction unit 32 that corrects the control parameters of the control unit 31, which will be described later. These are functional configurations implemented by the central processing device included in the control device 30 executing a program in the data storage device. In addition, one or both of the control unit 31 and the correction unit 32 may be configured by hardware.

### [Control Device: Control Unit]

The control unit 31 has a disturbance observer using a basic control model of the driving device 1 and an inverse model of the control model, determines an output value based on a plurality of predetermined control parameters, and executes the operation control for the motor 12.

Here, the control parameters (1) to (5) included in the plurality of control parameters of the control unit 31 will be described.

The control parameters (1) to (5) shown below are examples as control parameters of the control unit 31, and the control parameters (1) to (5) are not limited thereto, and more control parameters can be used for the operation control. Further, conversely, the control unit 31 may not be configured to control the operation of the motor 12 by using all of the following control parameters (1) to (5) as control parameters, or may be configured to control the operation for the motor 12 by using some of the control parameters (1) to (5) as control parameters.

The control parameter (1) is a starting torque of the driving device 1, shown in Fig. 5. The value of the starting torque indicates the starting characteristic of the driving device 1, and is a control parameter for friction compensation.

The starting torque indicates a value of a torque required to start the driving device 1 in a no-load state. Fig. 5 shows a shaft angle (dotted line), an axial speed (single-dot chain line), and a torque value (solid line) of the output member 16 when the starting torque is measured. At the time of measurement, the torque output of the motor 12 is gradually increased from 0, the shaft angle and the axial speed of the output member 16 are detected from the output of the output-side rotation detector 18B at that time, and the torque value when these are released from the 0 state is defined as the starting torque.

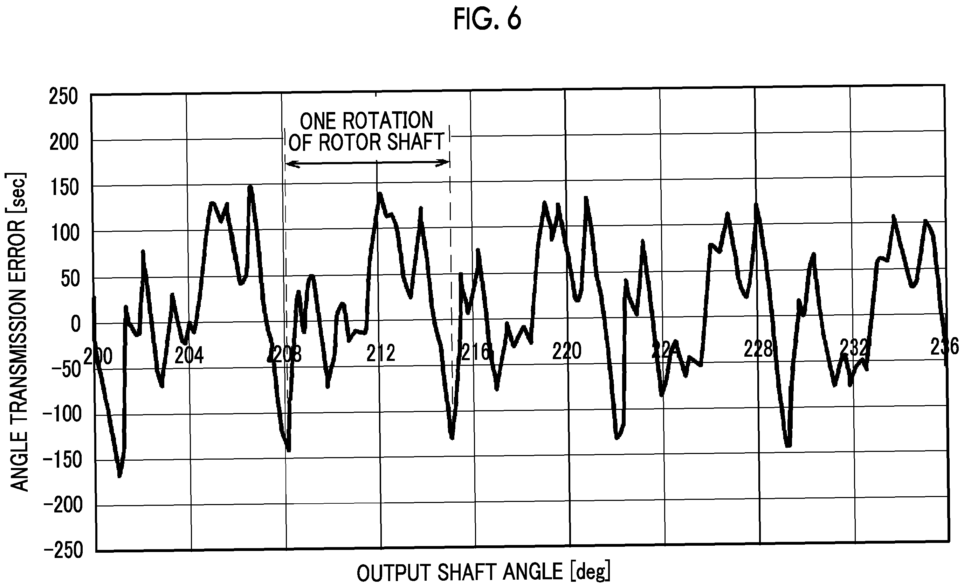

The control parameter (2) is an angle transmission error of the driving device 1, shown in Fig. 6. The angle transmission error indicates the speed stability and vibration characteristics of the driving device 1, and is a control parameter for speed and speed deviation compensation.

The angle transmission error is obtained from the difference between the theoretical output rotation angle and the measured output rotation angle when any rotation angle is input in a no-load state.

In Fig. 6, the horizontal axis is the shaft angle of the output member 16, and the vertical axis is the measured angle transmission error value.

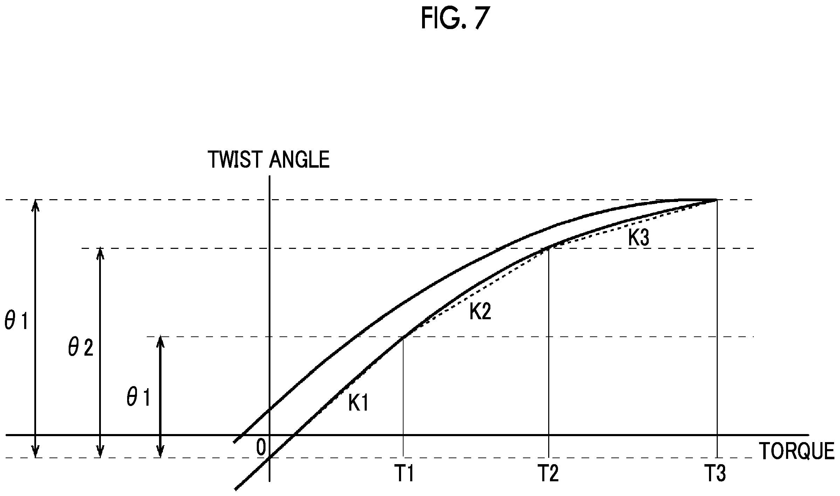

The control parameter (3) is a twist angle generated in the output member 16 of the speed reducer 15 of the driving device 1, shown in Fig. 7. The value of the twist angle indicates the positioning, vibration, and response characteristics of the driving device 1, and serves as a control parameter for the twist compensation.

Fig. 7 shows the measured values of the load and the displacement (twist angle) of the output member 16 by gradually applying a load up to the rated torque and unloading from the output member 16 side with the rotor shaft 13 fixed. When the rated torque is T3, the defined torques T1 and T2 (T1 < T2 < T3) smaller than the rated torque T3 and the twist angles θ1, θ2, and θ3 at the rated torque T3 are measured, the respective spring constants K1, K2, and K3 (K = T/θ) are calculated, and the values of each twist angle and each spring constant are set as characteristic values of the control parameters.

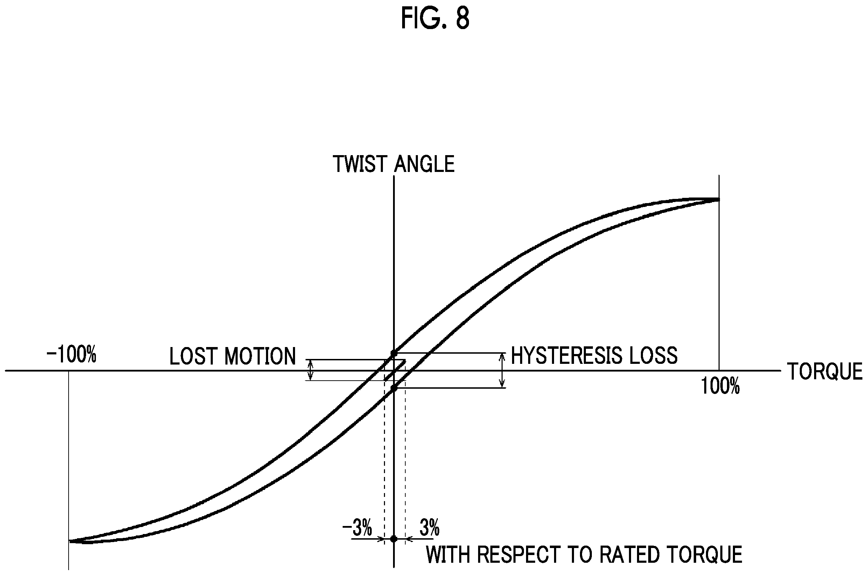

The control parameter (4) is the hysteresis of the twist angle generated in the output member 16 of the speed reducer 15 of the driving device 1, shown in Fig. 8. The value of the hysteresis of the twist angle indicates the positioning characteristic of the driving device 1, and is a control parameter for error compensation.

Fig. 8 shows a relationship between the load and the displacement (twist angle) of the output member 16 when the load and the displacement are measured by slowly applying a load up to the rated torque and unloading from the output member 16 side with the rotor shaft 13 fixed, with respect to the forward rotation and the reverse rotation. A hysteresis curve of stiffness as shown in Fig. 8 can be obtained from the measured values of the twist angles when a load is gradually increased to the rated torques, with respect to the forward rotation and the reverse rotation. Here, the lost motion described in Fig. 8 is defined as the twist angle at the point where the torque is ±3% of the rated torque.

The values of the hysteresis loss and the lost motion in this case are control parameters.

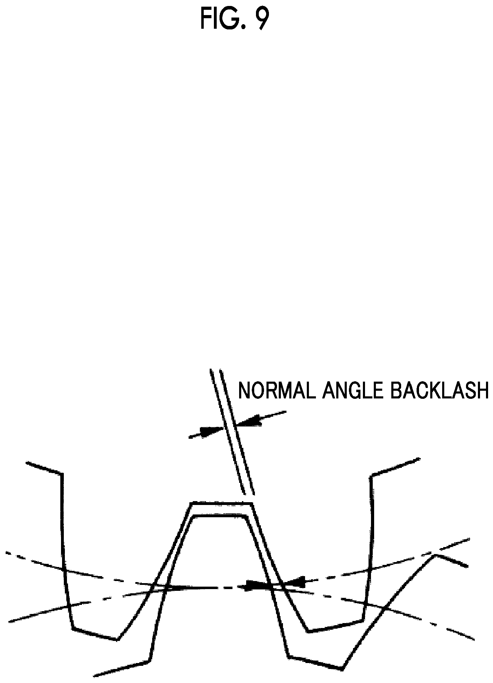

The control parameter (5) is the magnitude of the backlash generated between the external gear 15c of the speed reducer 15 of the driving device 1 and the first internal gear 15d and the second internal gear 15e, as shown in Fig. 9. In addition, Fig. 9 is an explanatory diagram showing an image of the backlash, and illustrates the backlash in the meshing between the external gears in order to facilitate understanding.

The backlash referred to here is a backlash in a direction perpendicular to the tooth surface. The backlash is measured by inserting a feeler gauge into the gap between the tooth surfaces that mesh with each other.

The value of the backlash indicates the positioning characteristic of the driving device 1, and is a control parameter for error compensation.

### [Control Device: Correction Unit]

The various control parameters used for the operation control of the control unit 31 are acquired by performing measurement at a stage (initial stage) before the driving device 1 is mounted on the master machine and practical use is started after the driving device 1 is manufactured. Then, various acquired control parameters are recorded in the storage device of the control device 30 and used for the operation control at the time of actual use.

Then, the various control parameters acquired in the initial stage have a decrease in numerical suitability with respect to a secular change after the actual start of use of the driving device 1, for example, a secular change due to an abrasion state of the speed reducer 15. However, it is not easy and impractical to measure various control parameters again for the driving device 1 which is incorporated in the master machine and has undergone a secular change.

The contents of correction of various control parameters performed by the correction unit 32 in order to solve the above-described problems will be described below.

First, the control device 30 stores in advance in a storage device (not illustrated), a data group with a secular change in the stress distribution of the first internal gear 15d based on the strain detected from each strain gauge 19, which is information that is affected by the abrasion state of the speed reducer, and the correction unit 32 can refer to these data groups.

In addition, the "data group with the secular change in the stress distribution of the first internal gear 15d" indicates a data group of the stress distribution at each stage in which the progress of the secular change of the speed reducer 15 is different.

The stress distribution of the first internal gear 15d can be acquired by a well-known method from the 3D data of the first internal gear 15d, the arrangement of each strain gauge 19, the amount of strain detected by each strain gauge 19, the direction of the strain, and the like.

Then, the data of the individual stress distributions configuring the data group with the secular change in the stress distribution of the first internal gear 15d can be obtained by continuously operating the driving device 1 which is the sample machine (test-dedicated machine for data collection) for a long time, detecting each strain gauge 19 at the start of an operation and every time a certain period has elapsed (for example, not particularly limited and appropriately set such as every 100 hours or every 1000 hours), and by measuring the stress distribution of the first internal gear 15d from each detected value.

Accordingly, for example, the data group with the secular change in the stress distribution of the first internal gear 15d includes the stress distribution of the first internal gear 15d at the start of the operation, the stress distribution of the first internal gear 15d after 100 hours of operation, the stress distribution of the first internal gear 15d after 200 hours of operation, the stress distribution of the first internal gear 15d after 300 hours of operation, and the like.

In addition, operating conditions such as an operation speed and a load state when data is collected by the driving device 1 of the sample machine are set to predetermined conditions assuming actual use.

In addition, in the present embodiment, the detection timing of each of the strain gauges 19 is a timing at which the position of any of the strain gauges 19 coincides with the long axis of the wave generator 15a in the circumferential direction. These measurement conditions are also stored in the storage device of the control device 30.

In addition, the control device 30 stores in advance, for each of the control parameters (1) to (5), the measured values of the respective changed control parameters (1) to (5) with the secular change, in the storage device described above. The correction unit 32 can refer to these measured values.

Even in the cases of the respective control parameters (1) to (5), in the same manner as in the case of the data group with the secular change in the stress distribution, the driving device 1 which is the sample machine is continuously operated for a long time, and at the start of an operation and every time a certain period (same time interval as in the measurement of the stress distribution) has elapsed, the control parameters (1) to (5) are measured to acquire a data group of measured values. The measurement of the control parameters (1) to (5) may be performed in the same sample machine as in the measurement of the stress distribution, or may be performed in another sample machine.

Accordingly, for example, the data group of the measured values obtained by the above-described measurement of the control parameters (1) to (5) includes the control parameters (1) to (5) at the initial stage of operation, the control parameters (1) to (5) after 100 hours of operation, the control parameters (1) to (5) after 200 hours of operation, the control parameters (1) to (5) after 300 hours of operation, and the like.

Then, when a predetermined update execution condition is satisfied, the correction unit 32 causes the measuring device 191 to execute the detection of the strain by the strain gauges 19 and the derivation of the stress distribution of the first internal gear 15d on the driving device 1 which is its own machine. In addition, it is preferable that the measurement conditions of the respective strain gauges 19 at this time match the measurement conditions of the data group with the secular change in the stress distribution of the first internal gear 15d described above. In addition, in a case where the measurement is performed by the measuring device 191, to eliminate the influence of disturbance as much as possible, it is preferable that the master machine (for example, a robot) performs a predetermined correction-time operation (for example, rotating the target joint from 0 degrees to 180 degrees with no load, or the like) that is determined in advance and performs the measurement during the correction-time operation.

In addition, the above-described update execution condition may be any condition as long as a certain frequency can be secured, such as periodic execution or turning on the main power of the device.

Then, when the derivation result of the stress distribution of the first internal gear 15d is obtained for the driving device 1 which is the own machine, the correction unit 32 refers to a data group with a secular change in the stress distribution of the first internal gear 15d based on the sample machine, compares the stress distribution of the first internal gear 15d for each operation period, and specifies the stress distribution of the first internal gear 15d during the most approximate operation period.

Then, in a case where the stress distribution of the first internal gear 15d during the most approximate operation period is other than the stress distribution of the first internal gear 15d at the start of an operation, the data group of measured values of control parameters (1) to (5) is referred to, the stress distribution of the first internal gear 15d during the most approximate operation period and the measured values of the control parameters (1) to (5) at the same time are specified, and the current set values of control parameters (1) to (5) are replaced and updated.

In this way, when the driving device 1 is used and certain update execution conditions are satisfied, the correction unit 32 can obtain the stress distribution of the first internal gear 15d from the detection of the strain by each of the strain gauges 19, specify the stress distribution of the first internal gear 15d in any operation period that is close to the stress distribution, and specify the control parameters (1) to (5) in the same operation period from the stress distribution.

Since the strain detected by each of the strain gauges 19 and the stress distribution of the first internal gear 15d based on the detected strain have a correlation with the abrasion states of the internal teeth and the external teeth of the speed reducer 15, by comparing the stress distribution of the first internal gear 15d, it is possible to specify the stress distribution in which the abrasion state of the driving device 1 of the sample machine is close (the operation period is close), and obtain the control parameters (1) to (5) measured from the sample machine at a time when the abrasion state is close (the operation period is close).

In addition, the data group with the secular change in the stress distribution of the first internal gear 15d is not limited to the one based on one sample machine, and the data group with the secular change in the stress distribution of the first internal gear 15d may be prepared for each of a plurality of sample machines. Alternatively, a plurality of stress distributions may be obtained by performing the measurement a plurality of times at each timing at which each strain gauge 19 becomes the long axis position of the wave generator 15a within a period sufficiently shorter than the period during which the detection by each strain gauge 19 is performed.

In these cases, a classifier is generated by a machine learning method using a plurality of stress distributions for each operation period as each training data, and by the classifier for each operation period, it may be determined which stress distribution of operation period the stress distribution of the first internal gear 15d of the driving device 1 currently in use corresponds to.

Then, when each of the control parameters (1) to (5) is updated by the correction unit 32, the control unit 31 executes the subsequent operation control for the motor 12 by using the updated control parameters (1) to (5).

### [Technical Effects In Embodiment Of Invention]

The driving device 1 includes the strain gauge 19 that detects the strain in the easily deformable portion 153d of the first internal gear 15d as information affected by the abrasion state of the speed reducer 15, a correction unit 32 that corrects the control parameters (1) to (5) to new control parameters (1) to (5), based on the detected information from the strain gauge 19, and a control unit 31 that controls the motor 12 based on the control parameters (1) to (5).

For this reason, with respect to the driving device 1 in which the abrasion state of the speed reducer 15 has progressed, it is possible to acquire new control parameters (1) to (5) having a correlation with the abrasion state of the speed reducer 15 without actually measuring each of the control parameters (1) to (5), and the control unit 31 can maintain an appropriate gain in the control of the motor 12 without setting the gain low, and control the motor 12 with higher accuracy.

In particular, in a case where the strain gauge 19 is used as a sensor that acquires information affected by the abrasion state, the strain of the first internal gear 15d in the driving state of the driving device 1 has a correlation with the progress of the abrasion state, so that the control parameters (1) to (5) according to the progress of the abrasion state can be appropriately acquired, and the motor 12 can be controlled with higher accuracy.

In addition, since a plurality of the strain gauges 19 are installed in the circumferential direction of the first internal gear 15d configuring the speed reducer 15, similarly, a correlation with the abrasion states of the internal teeth and the external teeth arranged in the circumferential direction is easily obtained, and it becomes possible to acquire more appropriate information influenced by the abrasion state of the speed reducer 15.

In addition, based on the detected information from the strain gauge 19, the correction unit 32 specifies a secular change in the control parameters such as the angle transmission error of the speed reducer 15, the backlash, the hysteresis of the twist angle with respect to the torque, and the starting torque, and corrects the control parameters based on the specified secular change.

Therefore, more appropriate control parameters are set according to the secular change of the speed reducer 15, and more accurate operation control of the motor 12 becomes possible.

### [Another Example Of Updating Control Parameters]

In addition, in the above-described embodiment, in order to acquire a data group with a secular change in the stress distribution of the first internal gear 15d referred to by the correction unit 32, the motor 12 is continuously operated at a constant speed for a long period of time in the driving device 1 of the sample machine, but the operation of the driving device 1 of the sample machine when acquiring the data group is not limited to the above.

For example, in a state where the driving device 1 of the sample machine is mounted on a master machine (for example, a robot or the like), the driving device 1 may acquire a data group with a secular change in the stress distribution of the first internal gear 15d referred to by the correction unit 32, by repeatedly executing a predetermined correction-time operation (for example, rotating the target joint from 0 degrees to 180 degrees with no load, or the like) that is determined in advance with respect to the master machine, and acquiring the data of the stress distribution of the first internal gear 15d based on the detection of each of the strain gauges 19 for each predetermined number of repetitions.

In that case, it is preferable that the data group of the measured values of the respective changed control parameters (1) to (5) with the secular change is also measured and acquired for each predetermined number of repetitions of the above-described correction-time operation.

Even in the above case, the update execution condition of the correction unit 32 may be any condition as long as the frequency can be secured to some extent.

Then, when the update execution condition is satisfied, the correction unit 32 compares the stress distribution of the first internal gear 15d, acquired for the driving device 1 which is own machine, with the data group with the secular change in stress distribution of the first internal gear 15d based on the sample machine, specifies control parameters (1) to (5) having the same number of repetitions as the stress distribution for the number of repetitions of the most approximate correction-time operation, and updates the control parameters (1) to (5).

Then, the control unit 31 executes the subsequent operation control for the motor 12 by using the updated control parameters (1) to (5).

In the case of performing the above update, since the data group with the secular change in the stress distribution of the first internal gear 15d referred to by the correction unit 32 is configured by the operation when the driving device 1 is mounted on the master machine, it is possible to obtain the data group with the secular change in stress distribution of the first internal gear 15d, which reflects the abrasion state of the speed reducer 15 caused by the operation of the master machine, so that it becomes possible to perform update to more appropriate control parameters (1) to (5), and control the motor 12 with higher accuracy.

### [Application Of Strain Gauge To Other Applications]

The strain gauge 19 as a sensor that detects information affected by the abrasion state of the speed reducer 15 may be used for other applications.

For example, in a state where the driving device 1 is mounted on a master machine (for example, a robot or the like), the control unit 31 may execute a predetermined operation control based on the detected information (detection strain) from the strain gauge 19. Specifically, when the detection strain of the strain gauge 19 exceeds a predetermined threshold during a normal operation of the robot (for example, an operation when the robot is used for a predetermined application), it is determined that any portion of the robot is in contact with an external object or the like, and the control unit 31 performs operation control such that the avoidance operation is executed as a predetermined operation.

Accordingly, each of the strain gauges 19 mounted on the driving device 1 is used not only when the update execution condition is satisfied but also for other applications, and the constituent resources of the driving device 1 can be effectively used.

### [Others]

Two embodiments of the present invention have been described above. However, the present invention is not limited to the embodiments described above.

For example, in the driving device 1, the stress distribution of the first internal gear 15d based on the detection strain of the plurality of strain gauges 19 is adopted as information affected by the abrasion state of the speed reducer 15, but the values of the detection strain of the plurality of strain gauges 19 and other numerical values derived from each detection value may be used as information affected by the abrasion state of the speed reducer 15. In a case where the detection strain values of the plurality of strain gauges 19 are used, one numerical value may be derived from the plurality of detection values by a statistical method.

In addition, in the above-described embodiment, the control device 30 prepares, in advance, in the storage device, a data group with a secular change in the stress distribution of the first internal gear 15d via actual measurement on the sample machine, and performs the comparison with the stress distribution of the first internal gear 15d based on the detection of the driving device 1 actually used, but the present invention is not limited thereto.

For example, in a case where the secular change of the stress distribution of the first internal gear 15d can be obtained by a predetermined calculation process or the like, a data group with a secular change in the stress distribution of the first internal gear 15d via actual measurement on a sample machine may not be prepared in advance.

Since it is possible to specify the degree of progress of the secular change of the stress distribution of the first internal gear 15d based on the detection of the driving device 1 actually used, from the calculation process for obtaining the secular change of the stress distribution of the first internal gear 15d, each control parameter corresponding to the degree of progress of the secular change may be specified.

In that case, actual measurement data for each control parameter corresponding to each degree of progress of the secular change may be prepared in advance. However, in a case where these control parameters can be calculated based on the degree of progress of the secular change of the stress distribution of the first internal gear 15d, new control parameters may be obtained via the calculation process.

In addition, the sensor that detects the information affected by the abrasion state of the speed reducer 15 is not limited to the strain gauge, and may be sensors that detect other types of information affected by the abrasion state. For example, a sensor that detects the amount of abrasion debris in the lubricant sealed in the speed reducer 15 or a sensor that detects vibration may be used.

In addition, in the above-described embodiment, an example is shown in which the speed reducer is a bending meshing type gear device. However, the type of the speed reducing mechanism according to the present invention is not particularly limited, and any type of speed reducer may be used. For example, the speed reducer according to the present invention may be a center crank type eccentric oscillating gear device, a so-called distributed type eccentric oscillating gear device in which two or more shafts having eccentric bodies are arranged offset from the axial center of the gear device, or a simple planetary gear device. Furthermore, a parallel-axis speed reducer or an orthogonal speed reducer may be used. In addition, in the above-described embodiment, an example is shown in which the speed reducer is a so-called tubular type bending meshing type gear device. However, the speed reducer according to the present invention may be a so-called cup type or silk hat type bending meshing type gear device.

Further, the installation location of the strain gauge 19 is not limited to the first internal gear 15d, and the strain gauge 19 may be provided in the second internal gear 15e as the internal gear member, or may be provided in any other portion.

In addition, details shown in the embodiment can be appropriately changed without departing from the gist of the invention.

### Industrial Applicability

The present invention has industrial applicability for actuators.

### Reference Signs List

1 Driving device (actuator)
12 Motor
15 Speed reducer
15a Wave generator
15b Wave generator bearing
15c External gear
15d First internal gear (internal gear member)
15e Second internal gear (internal gear member)
16 Output member
16a Member
18 Detection portion
18A Input-side rotation detector
18B Output-side rotation detector
19 Strain gauge (strain sensor)
30 Control device
31 Control unit
32 Correction unit
151d Internal tooth ring portion
152d External connection portion
153d Easily deformable portion
154d Through-hole
191 Measuring device
201 Support member
202 Mating member
O1 Center axis

## Claims

1. An actuator comprising:
a speed reducer;
a motor;
a control unit that controls the motor based on predetermined control parameters;
a sensor that is installed in the speed reducer and detects information affected by an abrasion state of the speed reducer; and
a correction unit that corrects the control parameters based on the detected information from the sensor.

2. The actuator according to claim 1, wherein
the sensor is a strain sensor.

3. The actuator according to claim 2, wherein
a plurality of the sensors are installed in a circumferential direction of an internal gear member configuring the speed reducer.

4. The actuator according to any one of claims 1 to 3, wherein
the correction unit
specifies a secular change for at least one of an angle transmission error of the speed reducer, a backlash, a hysteresis of a twist angle with respect to a torque, or a starting torque, based on the detected information from the sensor, and
corrects the control parameters based on the specified secular change.

5. The actuator according to any one of claims 1 to 4, wherein
the correction unit corrects the control parameters, based on the detected information from the sensor when a master machine on which the actuator is mounted performs a predetermined correction-time operation that is determined in advance.

6. The actuator according to any one of claims 1 to 5, wherein
the control unit controls the actuator, based on information detected by the sensor during a normal operation of a master machine on which the actuator is mounted.
